# EUROPEAN PATENT SPECIFICATION

(11) **EP 0 918 470 B1**
(45) Date of publication and mention of the grant of the patent: **27.11.2002**
(21) Application number: 97931967.0
(22) Date of filing: 21.07.1997
(51) Int. Cl.: A23L 1/325, A23L 1/0532, A23L 1/054, A23L 1/27, A23L 1/317, A23J 3/22

(54) **GELLED FOOD PRODUCT COMPRISING TWO DISTINCT GELLED PORTIONS**
GELIERTES NAHRUNGSMITTEL, ENTHALTEND ZWEI UNTERSCHIEDLICHE GELIERTE TEILE
ALIMENT GELIFIE COMPRENANT DEUX PARTIES GELIFIEES DISTINCTES

(30) Priority: 19.07.1996 EP 96305328; 16.08.1996 GB 9617256
(43) Date of publication of application: 02.06.1999
(73) Proprietor: MARS UK LIMITED, Slough, Berkshire SL1 4LW (GB)
(72) Inventor: FEE, Iain, Albury, NSW 2640 (AU); ARISS, Stephen Arthur, Leicestershire LE13 1EZ (GB); JAMES, John, Lavington, NSW 2641 (AU); BEECH, John Anthony, Melton Mowbray, Leicestershire LE13 1LE (GB)
(74) Representative: Marlow, Nicholas Simon
(86) International application number: GB9701955
(87) International publication number: WO98003086

(56) References cited:
- EP-A- 0 494 318
- FR-A- 2 632 160
- US-A- 3 640 732
- US-A- 4 169 161
- US-A- 5 417 990
- T.C. LANIER: "Surimi Technology" 1992 , USA XP000617715 Chapter 11, pp.273-302 see page 273, paragraph 3 see page 287, paragraph 2 - page 289, paragraph 4 see page 295, paragraph 3 - page 297, paragraph 1
- DATABASE WPI Week 9434 Derwent Publications Ltd., London, GB; AN 94-273303 XP002046460 & ES 2 055 668 A (PASTOR MARIN) , 16 August 1994

## Description

This invention relates to a gelled food product which mimics the appearance of a naturally occurring foodstuff.

It is known to provide gelled proteinaceous foodstuffs which comprise a mixture of protein such as meat, fish or vegetable protein, and one or more gelling agents such as alginate, guar gum, carob gum and so on. Alternatively, the protein alone may gel adequately.

Products of this type are substantially homogenous; they can be treated during production to give them a surface texture reminiscent of for example, a piece of meat or fish. Proposals have also been made to give such pieces internal structure similar to that of meat.

ES 2 055 668 discloses a gelled fish product comprising white, pale grey and darker portions, which mimics the appearance of eel. EP 0 494 318 discloses a gelled fish product in which gels of two colours are employed to represent flesh and skin; a third gel may be employed of a bloody colour. US 3 640 732 discloses a gelled product simulating cooked egg including a white portion and a yolk portion. The gels are heat stable, and may include protein and colourant.

According to the present invention there is provided a gelled proteinaceous foodstuff which mimics the appearance of a cooked or uncooked naturally occurring foodstuff comprising two visually distinct portions, the gelled foodstuff comprising a core of a first heat stable gel of a first colour, and a coating over at least a part of the core surface, the coating comprising a second heat stable gel of a second colour adjacent a third heat stable gel of a third colour different from the second colour, at least one of the gels containing protein and at least one of the gels including an edible heat stable colorant, the colours of the second and third gels being blended in the region where the gels meet to give a graduated change of colour from that of the second gel to the third gel. Preferably, the gels and the colorants are retort stable, so that the foodstuff may be canned.

It is preferred that both gels contain protein. Alternatively, the one of the gels, preferably the second, may be a gel of alginate alone. It is also preferred that the second gel includes a colorant.

In a preferred embodiment, the coating includes a third heat stable gel of a different colour to the second gel. Preferably, both the second and third gels contain edible heat stable colorants. It is also preferred that the third gel contain protein.

Although it is preferred that all the gels contain protein, this need not be so; for example the coating gel or gels may be alginate gels containing no protein.

The naturally occurring foodstuff mimicked by the gelled foodstuff of the invention can be any foodstuff which has two visually distinct portions, such as skin and flesh or fat and flesh. Preferred examples of such foodstuffs are fish and meats, including chicken and beef.

The juxtaposition of the core and the coating gel or gels is particularly effective at simulating a chunk of meat or fish with a layer of skin or fat. In particular, an appropriately shaped core can be coated with two gels of contrasting colours, such as black and white, which blend where they meet to produce a graduated grey zone between the black and white zones, which is especially reminiscent of fish skin. In this way, a very natural looking fish chunk is provided. It is particularly preferred that at least one of the gels, preferably the core, includes a fish flavourant.

Among preferred colorants are dried blood, carbon black, titanium dioxide, calcium carbonate and annatto.

In addition to the edible colorants, the coating gel or gels preferably includes a hydrocolloid to keep the colorants in suspension; this allows the use of lower levels of protein in the coating gel or gels than in the core. The hydrocolloids employed are non-gelling, but increase the viscosity of the unset coating. A preferred hydrocolloid is xanthan; other suitable hydrocolloids are guar, alginate, carob and pre-gelled starches. The hydrocolloids are preferably present in an amount of from 0.05% to 6% by weight; in the case of xanthan, the preferred range is 0.05% to 0.8% by weight.

The invention also encompasses a method of making the coated gelled proteinaceous foodstuff of the invention.

The invention will be further described by way of example with reference to the drawings in which:
Figure 1 shows a cross section through a chunk according to a preferred embodiment of the invention; and

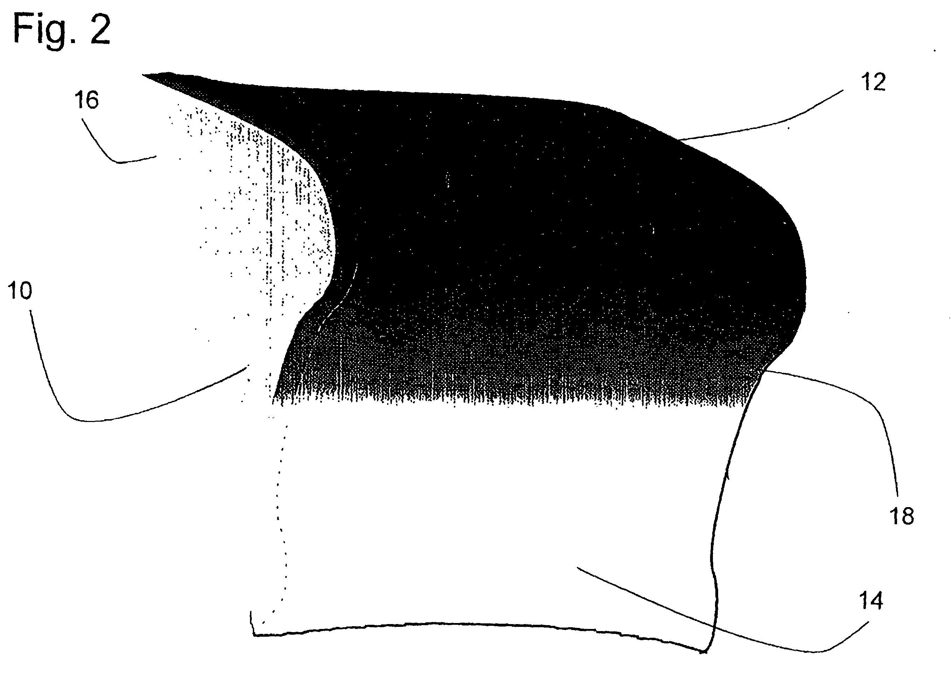

Figure 2 shows a perspective view of a chunk according to a preferred embodiment of the invention.

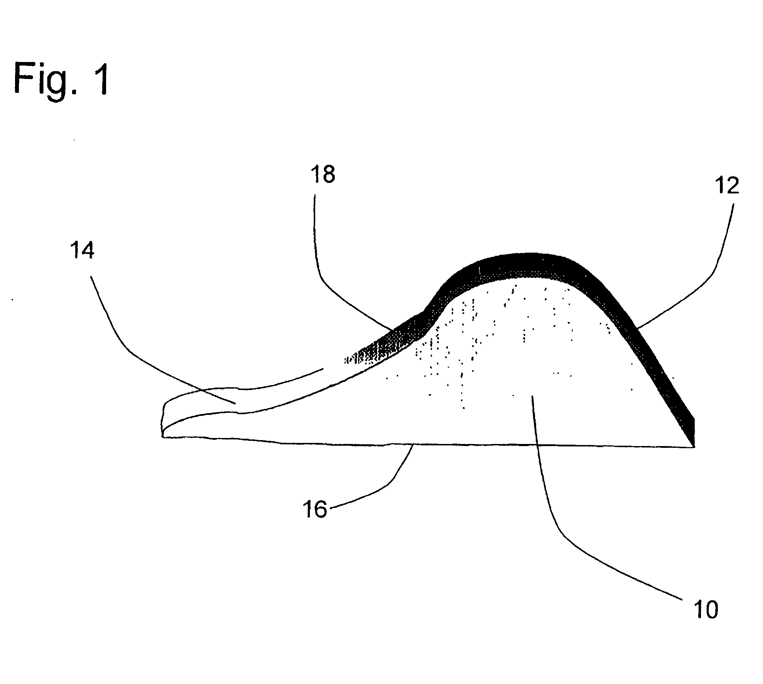

The chunk shown in cross section in Figure 1 comprises a core 10 of a heat stable proteinaceous gel. The gelling system may be any heat stable gelling system suitable for food (including petfood) use, such as alginate set with calcium ions. The protein may be meat, fish or vegetable, and the gel includes a flavourant to render it fish flavoured, if necessary.

A first, black, coating 12 and a second, white, coating 14 overlie the core 10, on its upper surface; its bottom surface 16 is uncoated. The coatings are also proteinaceous gels. The gelling systems of the coatings may be the same as each other and as that of the core 10, or they may be different. They include from 0.05% to 0.8% by weight xanthan. The heat stable edible black colorant in the black coating 12 is from 0.1% to 5% by weight coating carbon black and from 1% to 20%, preferably 10%, by weight of whole dried blood. In the white coating gel 14, the colorant is from 1 to 10%, preferably 2.5%, by weight titanium dioxide and/or from 1 to 15%, preferably 7.5%, by weight calcium carbonate.

The hydrocolloid assists in holding the colorant in suspension in the gel and improves flowability.

The two coatings 12 and 14 meet each other, and their colorants blend to give an intermediate zone 18 between the black coating 12 and the white coating 14, which is graduated in colour from black adjacent the black coating 12 through grey to white adjacent the white coating 14.

The shape of the chunk is reminiscent of a piece cut from the side of a round fish such as mackerel. The intermediate grey zone 18 between the black 12 and white 14 coatings enhances the impression of the chunk as a piece of fish.

In order to manufacture the chunks shown in the drawings, a rope of gel containing protein having a cross section corresponding to that of the core 10 is extruded in a conventional manner. As the core is extruded, a gel containing the black colorant and a gel containing the white colorant are applied to its surface, preferably by extrusion or spraying. This assembly passes a spreading device which distributes the gels over the surface of the core and brings them together in the intermediate zone 18. The gels set to provide the black 12 and white 14 coatings towards respective sides of the core, and the graduated grey coating in the intermediate zone 18. The formed foodstuff can be cut into chunks prior to packing. provided that the gels and colorants are retort stable, the chunks can be canned together with a suitable medium and retorted.

It will be appreciated that by an appropriate choice and combination of colorants in one or more coatings on a gelled core, chunks which accurately resemble meat, fish or vegetable products can be provided.

## Claims

1. A gelled proteinaceous foodstuff which mimics the appearance of a cooked or uncooked naturally occurring foodstuff comprising two visually distinct portions, the gelled foodstuff comprising a core of a first heat stable gel of a first colour, and a coating over at least a part of the core surface, the coating comprising a second heat stable gel of a second colour adjacent a third heat stable gel of a third colour different from the second colour, at least one of the gels containing protein and at least one of the gels including an edible heat stable colorant, the colours of the second and third gels being blended in the region where the gels meet to give a graduated change of colour from that of the second gel to the third gel.

2. A gelled proteinaceous foodstuff according to claim 1 in which all the gels contain protein.

3. A gelled proteinaceous foodstuff according to claim 1 or 2 in which the second gel includes an edible heat stable colorant.

4. A gelled proteinaceous foodstuff according to any preceding claim in which the third gel includes an edible heat stable colorant.

5. A gelled proteinaceous foodstuff according to any preceding claim in which the coating extends over only a part of the surface of the core.

6. A gelled proteinaceous foodstuff according to any preceding claim in which at least one of the gels, preferably the first gel, contains a flavourant.

7. A gelled proteinaceous foodstuff according to any preceding claim in which the coating has the appearance of meat or fish skin.

8. A gelled proteinaceous foodstuff according to any preceding claim in which one of the gels, preferably the second or third gel, includes carbon black as a colorant.

9. A gelled proteinaceous foodstuff according to claim 8 in which the carbon black is present in the said gel in amount of from 0.1% to 5% by weight.

10. A gelled proteinaceous foodstuff according to any preceding claim in which one of the gels, preferably the second or third gel, includes whole dried blood as a colorant.

11. A gelled proteinaceous foodstuff according to claim 10 in which the whole dried blood is present in the said gel in an amount of from 1% to 20%, preferably 10%, by weight.

12. A gelled proteinaceous foodstuff according to any preceding claim in which at least one of the gels, preferably the second or third gel, contains titanium dioxide as colorant.

13. A gelled proteinaceous foodstuff according to claim 12 in which the titanium dioxide is present in the said gel in an amount of from 1 to 10%, preferably 2.5%, by weight.

14. A gelled proteinaceous foodstuff according to any preceding claim in which at least one of the gels, preferably the second or third gel, contains calcium carbonate as colorant.

15. A gelled proteinaceous foodstuff according to claim 14 in which the calcium carbonate is present in the said gel in an amount of from 1 to 15%, preferably 7.5%, by weight.

16. A gelled proteinaceous foodstuff according to any preceding claim in which at least one of the gels, preferably the second or third gel, contains annatto as colorant.

17. A gelled proteinaceous foodstuff according to any preceding claim in which the coating gel or gels contains a hydrocolloid.

18. A gelled proteinaceous foodstuff according to claim 17 in which the hydrocolloid is present in the said gel or gels in an amount of from 0.05% to 6% by weight.

19. A gelled proteinaceous foodstuff according to claim 17 or 18 in which the hydrocolloid is xanthan.

20. A gelled proteinaceous foodstuff according to claim 19 in which the xanthan is present in the said gel or gels in an amount of from 0.05% to 0.8% by weight.

21. A gelled proteinaceous foodstuff according to any preceding claim in which part of the surface of the core is coated by a second gel containing carbon black, part of the surface of the core is coated by a third gel containing titanium dioxide abutting the second gel, the colorants of the second and third gels blending at the abutment between the second and third gels to give a grey coating region, whereby the coating has the appearance of fish skin.

22. A gelled proteinaceous foodstuff according to claim 21 in which part of the surface of the core is uncoated.

23. A gelled proteinaceous foodstuff according to any preceding claim in the form of a shaped piece having the shape of a chunk cut from a fish including the fish skin.

24. A gelled proteinaceous foodstuff according to any preceding claim including a flavourant which imparts a fish flavour to the foodstuff.

25. A gelled proteinaceous foodstuff according to any preceding claim in which the first, second and third gels are of different colours to each other.

## Patentansprüche

1. Geliertes, proteinartiges Nahrungsmittel, das das Aussehen eines gekochten oder nicht gekochten, natürlich vorkommenden Nahrungsmittels nachahmt, umfassend zwei visuell unterschiedliche Abschnitte, wobei das gelierte Nahrungsmittel einen Kern aus einem ersten wärmebeständigen Gel mit einer ersten Farbe und eine Beschichtung über wenigstens einem Teil der Kernoberfläche umfasst, wobei die Beschichtung ein zweites wärmebeständiges Gel mit einer zweiten Farbe neben einem dritten wärmebeständigen Gel mit einer dritten Farbe umfasst, die sich von der zweiten Farbe unterscheidet, wobei wenigstens eines der Gele Protein enthält und wenigstens eines der Gele einen essbaren, wärmebeständigen Farbstoff enthält, wobei die Farben des zweiten und dritten Gels in der Region miteinander vermischt werden, wo sich die Gele treffen, um eine abgestufte Farbveränderung vom zweiten Gel zum dritten Gel zu erhalten.

2. Geliertes proteinartiges Nahrungsmittel nach Anspruch 1, wobei alle Gele Protein enthalten.

3. Geliertes proteinartiges Nahrungsmittel nach Anspruch 1 oder 2, wobei das zweite Gel einen essbaren, wärmebeständigen Farbstoff enthält.

4. Geliertes proteinartiges Nahrungsmittel nach einem der vorherigen Ansprüche, wobei das dritte Gel einen essbaren, wärmebeständigen Farbstoff enthält.

5. Geliertes proteinartiges Nahrungsmittel nach einem der vorherigen Ansprüche, wobei sich die Beschichtung nur über einen Teil der Kernoberfläche erstreckt.

6. Geliertes proteinartiges Nahrungsmittel nach einem der vorherigen Ansprüche, wobei wenigstens eines der Gele, vorzugsweise das erste Gel, einen Aromastoff enthält.

7. Geliertes proteinartiges Nahrungsmittel nach einem der vorherigen Ansprüche, wobei die Beschichtung das Aussehen von Fleisch oder Fischhaut hat.

8. Geliertes proteinartiges Nahrungsmittel nach einem der vorherigen Ansprüche, wobei eines der Gele, vorzugsweise das zweite oder dritte Gel, Kohleschwarz als Farbstoff enthält.

9. Geliertes proteinartiges Nahrungsmittel nach Anspruch 8, wobei das Kohleschwarz in dem genannten Gel in einer Menge zwischen 0,1 und 5 Gew.-% vorliegt.

10. Geliertes proteinartiges Nahrungsmittel nach einem der vorherigen Ansprüche, wobei eines der Gele, vorzugsweise das zweite oder dritte Gel, getrocknetes Vollblut als Farbstoff enthält.

11. Geliertes proteinartiges Nahrungsmittel nach Anspruch 10, wobei das getrocknete Vollblut in dem genannten Gel in einer Menge zwischen 1 und 20 Gew.-%, vorzugsweise 10 Gew.-%, vorliegt.

12. Geliertes proteinartiges Nahrungsmittel nach einem der vorherigen Ansprüche, wobei wenigstens eines der Gele, vorzugsweise das zweite oder dritte Gel, Titandioxid als Farbstoff enthält.

13. Geliertes proteinartiges Nahrungsmittel nach Anspruch 12, wobei das Titandioxid in dem genannten Gel in einer Menge zwischen 1 und 10 Gew.-%, vorzugsweise 2,5 Gew.-%, vorliegt.

14. Geliertes proteinartiges Nahrungsmittel nach einem der vorherigen Ansprüche, wobei wenigstens eines der Gele, vorzugsweise das zweite oder dritte Gel, Calciumcarbonat als Farbstoff enthält.

15. Geliertes proteinartiges Nahrungsmittel nach Anspruch 14, wobei das Calciumcarbonat in dem genannten Gel in einer Menge zwischen 1 und 15 Gew.-%, vorzugsweise 7,5 Gew.-%, vorliegt.

16. Geliertes proteinartiges Nahrungsmittel nach einem der vorherigen Ansprüche, wobei wenigstens eines der Gele, vorzugsweise das zweite oder dritte Gel, Annatto als Farbstoff enthält.

17. Geliertes proteinartiges Nahrungsmittel nach einem der vorherigen Ansprüche, wobei das Beschichtungsgel oder die Gele ein Hydrokolloid enthält/enthalten.

18. Geliertes proteinartiges Nahrungsmittel nach Anspruch 17, wobei das Hydrokolloid in dem genannten Gel oder den Gelen in einer Menge zwischen 0,05 und 6 Gew.-% vorliegt.

19. Geliertes proteinartiges Nahrungsmittel nach Anspruch 17 oder 18, wobei das Hydrokolloid Xanthan ist.

20. Geliertes proteinartiges Nahrungsmittel nach Anspruch 19, wobei das Xanthan in dem genannten Gel oder den Gelen in einer Menge zwischen 0,05 und 0,8 Gew.-% vorliegt.

21. Geliertes proteinartiges Nahrungsmittel nach einem der vorherigen Ansprüche, wobei ein Teil der Oberfläche des Kerns von einem zweiten Gel beschichtet wird, das Kohleschwarz enthält, ein Teil der Oberfläche des Kerns von einem dritten Gel beschichtet wird, das Titandioxid enthält und an das zweite Gel angrenzt, wobei sich die Farbstoffe des zweiten und des dritten Gels an der Angrenzungsstelle zwischen dem zweiten und dritten Gel vermischen und eine graue Beschichtungsregion bilden, so dass die Beschichtung das Aussehen von Fischhaut hat.

22. Geliertes proteinartiges Nahrungsmittel nach Anspruch 21, wobei ein Teil der Kernoberfläche unbeschichtet ist.

23. Geliertes proteinartiges Nahrungsmittel nach einem der vorherigen Ansprüche, in der Gestalt eines Formstücks mit der Form eines aus einem Fisch geschnittenen Stücks einschließlich der Fischhaut.

24. Geliertes proteinartiges Nahrungsmittel nach einem der vorherigen Ansprüche, einschließlich eines Aromastoffs, der dem Nahrungsmittel einen Fischgeschmack verleiht.

25. Geliertes proteinartiges Nahrungsmittel nach einem der vorherigen Ansprüche, wobei das erste, zweite und dritte Gel voneinander unterschiedliche Farben haben.

## Revendications

1. Produit alimentaire protéinique gélifié qui imite l'aspect d'un produit alimentaire survenant naturellement cuit ou non cuit, comprenant deux parties visuellement distinctes, le produit alimentaire gélifié comprenant un centre en un premier gel thermostable d'une première couleur, et un enrobage sur au moins une partie de la surface du centre, l'enrobage comprenant un deuxième gel thermostable d'une deuxième couleur adjacent à un troisième gel thermostable d'une troisième couleur différente de la deuxième couleur, au moins l'un des gels contenant des protéines et au moins l'un des gels comprenant un colorant comestible thermostable, les couleurs des deuxième et troisième gels étant mélangées dans la région où les gels se touchent pour donner un changement gradué de couleur entre celle du deuxième gel et le troisième gel.

2. Produit alimentaire protéinique gélifié selon la revendication 1 dans lequel tous les gels contiennent des protéines.

3. Produit alimentaire protéinique gélifié selon la revendication 1 ou 2 dans lequel le deuxième gel comprend un colorant comestible thermostable.

4. Produit alimentaire protéinique gélifié selon l'une quelconque des revendications précédentes dans lequel le troisième gel comprend un colorant comestible thermostable.

5. Produit alimentaire protéinique gélifié selon l'une quelconque des revendications précédentes dans lequel l'enrobage s'étend sur une partie seulement de la surface du centre.

6. Produit alimentaire protéinique gélifié selon l'une quelconque des revendications précédentes dans lequel au moins l'un des gels, de préférence le premier gel, contient un arôme.

7. Produit alimentaire protéinique gélifié selon l'une quelconque des revendications précédentes dans lequel l'enrobage a l'aspect de viande ou de peau de poisson.

8. Produit alimentaire protéinique gélifié selon l'une quelconque des revendications précédentes dans lequel l'un des gels, de préférence le deuxième ou le troisième gel, comprend du noir de carbone en qualité de colorant.

9. Produit alimentaire protéinique gélifié selon la revendication 8 dans lequel le noir de carbone est présent dans ledit gel en une quantité de 0,1% à 5% en poids.

10. Produit alimentaire protéinique gélifié selon l'une quelconque des revendications précédentes dans lequel l'un des gels, de préférence le deuxième ou le troisième gel, comprend du sang complet séché en qualité de colorant.

11. Produit alimentaire protéinique gélifié selon la revendication 10 dans lequel le sang complet séché est présent dans ledit gel en une quantité de 1% à 20%, de préférence de 10% en poids.

12. Produit alimentaire protéinique gélifié selon l'une quelconque des revendications précédentes dans lequel au moins l'un des gels, de préférence le deuxième ou le troisième gel, contient du dioxyde de titane en qualité de colorant.

13. Produit alimentaire protéinique gélifié selon la revendication 12 dans lequel le dioxyde de titane est présent dans ledit gel en une quantité de 1 à 10%, de préférence de 2,5%, en poids.

14. Produit alimentaire protéinique gélifié selon l'une quelconque des revendications précédentes dans lequel au moins l'un des gels, de préférence le deuxième ou le troisième gel, contient du carbonate de calcium en qualité de colorant.

15. Produit alimentaire protéinique gélifié selon la revendication 14 dans lequel le carbonate de calcium est présent dans ledit gel en une quantité de 1 à 15%, de préférence de 7,5%, en poids.

16. Produit alimentaire protéinique gélifié selon l'une quelconque des revendications précédentes dans lequel au moins l'un des gels, de préférence le deuxième ou le troisième gel, contient du rocou en qualité de colorant.

17. Produit alimentaire protéinique gélifié selon l'une quelconque des revendications précédentes dans lequel le gel ou les gels d'enrobage contient/contiennent un hydrocolloïde.

18. Produit alimentaire protéinique gélifié selon la revendication 17 dans lequel l'hydrocolloïde est présent dans ledit gel ou lesdits gels en une quantité de 0,05% à 6% en poids.

19. Produit alimentaire protéinique gélifié selon la revendication 17 ou 18 dans lequel l'hydrocolloïde est du xanthane.

20. Produit alimentaire protéinique gélifié selon la revendication 19 dans lequel le xanthane est présent dans ledit gel ou lesdits gels en une quantité de 0,05% à 0,8% en poids.

21. Produit alimentaire protéinique gélifié selon l'une quelconque des revendications précédentes dans lequel une partie de la surface du centre est enrobée par un deuxième gel contenant du noir de carbone, une partie de la surface du centre est enrobée par un troisième gel contenant du dioxyde de titane contigu au deuxième gel, les colorants des deuxième et troisième gels se mélangeant à la contiguïté entre les deuxième et troisième gels pour donner une région d'enrobage gris, en vertu de quoi l'enrobage a l'aspect de peau de poisson.

22. Produit alimentaire protéinique gélifié selon la revendication 21 dans lequel une partie de la surface du centre n'est pas enrobée.

23. Produit alimentaire protéinique gélifié selon l'une quelconque des revendications précédentes en forme d'un morceau mis en forme ayant la forme d'un morceau de poisson coupé incluant la peau de poisson.

24. Produit alimentaire protéinique gélifié selon l'une quelconque des revendications précédentes comprenant un arôme qui donne un goût de poisson au produit alimentaire.

25. Produit alimentaire protéinique gélifié selon l'une quelconque des revendications précédentes dans lequel les premier, deuxième et troisième gels sont de différentes couleurs les uns des autres.
